# EUROPÄISCHE PATENTSCHRIFT

(11) **EP 0 758 966 B1**
(45) Veröffentlichungstag und Bekanntmachung des Hinweises auf die Patenterteilung: **08.07.1998**
(21) Anmeldenummer: 95917969.8
(22) Anmeldetag: 26.04.1995
(51) Int. Cl.: B60T 8/32, B60T 8/26, B60T 13/68

(54) **ELEKTRONISCH REGELBARES BREMSBETÄTIGUNGSSYSTEM**
ELECTRONICALLY CONTROLLABLE BRAKE OPERATING SYSTEM
SYSTEME D'ACTIONNEMENT DE FREIN REGULABLE ELECTRONIQUEMENT

(30) Priorität: 03.05.1994 DE 4415438
(43) Veröffentlichungstag der Anmeldung: 26.02.1997
(73) Patentinhaber: ITT Automotive Europe GmbH, 60488 Frankfurt am Main (DE)
(72) Erfinder: FEIGEL, Hans-Jörg, D-61191 Rosbach (DE); KLEIN, Andreas, D-61350 Bad Homburg (DE); NEUMANN, Ulrich, D-64380 Rossdorf (DE); SCHIEL, Lothar, D-65719 Hofheim (DE)
(86) Internationale Anmeldenummer: EP9501590
(87) Internationale Veröffentlichungsnummer: WO9529830

(56) Entgegenhaltungen:
- EP-A- 0 317 182
- DE-A- 3 322 422
- DE-A- 3 424 912
- US-A- 4 756 391
- US-A- 5 163 744
- US-A- 5 246 283

## Beschreibung

Die Erfindung betrifft ein elektronisch regelbares, blockiergeschütztes Bremsbetätigungssystem für Kraftfahrzeuge gemäß den Oberbegriffen der unabhängigen Ansprüche 1 und 2.

Ein derartiges Bremsbetätigungssystem ist aus der DE-OS 34 24 912 bekannt. Bei dem vorbekannten Bremsbetätigungs-system erfolgt das Absperren der hydraulischen Verbindungen zwischen den Bremsdruckgebern und dem Hauptbremszylinder mittels in den Hydraulikzylindern der Bremsdruckgeber ausgebildeter Bohrungen (Schnüffellöcher), die bei Betätigung der Bremsdruckgeber von an deren Kolben angeordneten Dichtelementen überfahren werden.

Abgesehen davon, daß eine Pedalrückstellung ungedämpft gegen den Fahrerfuß erfolgt, erlauben die absperrbaren hydraulischen Verbindungen in einem ABS-Regelfall nicht den Abbau des in den Radbremsen herrschenden hydraulischen Druckes auf nahe Null bar, da bei der hierzu erforderlichen vollständigen Rückstellbewegung des Bremsdruckgeberkolbens die vorhin genannte Bohrung freigegeben würde, an der der vom Fahrer erzeugte, verhältnismäßig hohe Druck ansteht.

Außerdem erfolgt die direkte Betätigung der durch die Kombination Bohrung (Schnüffelloch)-Dichtelement gebildeten Ventileinrichtung durch den elektrischen Antrieb real aufgrund der nicht vernachlässigbaren Massenträgheiten mit einer Zeitverzögerung, die ihrerseits ein Einströmen eines beachtlichen Druckmittelvolumens zur Folge hat, so daß auch aus diesem Grund ein Druckabbau auf Werte nahe Null bar nicht möglich ist. Dadurch werden insbesondere Regelvorgänge bei niedrigen µ-Werten beeinträchtigt.

Es ist daher Aufgabe der vorliegenden Erfindung ein elektronisch regelbares Bremsbetätigungssystem der eingangs genannten Gattung dahingehend zu verbessern, daß insbesondere die bei einer ABS-Regelung genannten Nachteile weitgehendst vermieden werden. Insbesondere soll eine Verbesserung des Pedalgefühls bei gleichzeitiger Erhöhung der Qualität der ABS-Regelung erreicht werden.

Eine erste Lösung dieser Aufgabe besteht darin, daß die Verbindung zwischen der ersten Arbeitskammer und dem Hauptbremszylinder über ein erstes und ein zweites elektromagnetisch betätigbares Trennventil erfolgt, und daß die Verbindung zwischen dem Hauptbremszylinder und der zweiten Arbeitskammer ausschließlich über das zweite Trennventil erfolgt, wobei bei einem Druckabbau während einer ABS-Regelung die erste und die zweite Arbeitskammer einander hydraulisch verbunden sind, während die Verbindung zwischen der zweiten Arbeitskammer und dem Hauptbremszylinder geschlossen bleibt.

Eine zweite Lösung der vorhin gestellten Aufgabe, bei der keine Verbindung zwischen der ersten Arbeitskammer und dem Hauptbremszylinder besteht und die zweite Arbeitskammer mit dem Hauptbremszylinder über eine absperrbare hydraulische Verbindung verbunden ist, wobei der Stufenkolben lediglich im Sinne einer Bremsdruckerzeugung betätigbar ist, sieht vor, daß zwischen der zweiten Arbeitskammer und dem Hauptbremszylinder ein elektromagnetisch betätigbares Ventil vorgesehen ist, in dessen erster Schaltstellung die Arbeitskammern voneinander getrennt sind und die Verbindung zwischen der zweiten Arbeitskammer und dem Hauptbremszylinder geöffnet ist und in dessen zweiter Schaltstellung der Hauptbremszylinder von der zweiten Arbeitskammer getrennt ist und eine Verbindung zwischen der ersten und der zweiten Arbeitskammer erfolgt, wobei bei einem Druckabbau während einer ABS-Regelung die erste und die zweite Arbeitskammer miteinander hydraulisch verbunden sind, während die Verbindung zwischen der zweiten Arbeitskammer und dem Hauptbrems-zylinder geschlossen bleibt.

Durch diese Maßnahmen wird erreicht, daß das vom Fahrer in die Radbremse verdrängte Volumen im ABS-Regelfall durch das Volumen einer den Bremsdruckgeber-Stufenkolben betätigenden, aus ihm heraustretenden Kolbenstange kompensiert und der Druck auf Null bar abgebaut wird.

Dabei ist es besonders vorteilhaft, wenn eine Sensoreinrichtung zur Erkennung des Fahrerverzögerungswunsches vorgesehen ist.

Eine besonders kostengünstig herstellbare Ausführung der Erfindung besteht darin, daß die Trennventile gemeinsam betätigbar sind.

Außerdem ist insbesondere bei der zweiten erfindungsgemäßen Lösung sinnvoll, daß das Ventil als ein 3/2-Wegeventil ausgebildet ist.

Eine weitere, kostengünstig herstellbare Ausführung, bei der eine hohe Dichtigkeit der 3/2-Wegeventile in beiden Schaltstellungen (zum Hauptbremszylinder sowie zur Radbremse) gewährleistet ist, besteht darin, daß die 3/2-Wegeventile als Doppelsitzventile ausgebildet sind.

Eine kontrollierte Ansteuerung, insbesondere bezüglich der Schwellwerte bzw. Gradienten, der Ventile, die erst nach einer Fehlerüberprüfung freigegeben werden, wird bei einer weiteren vorteilhaften Ausgestaltung des Erfindungsgegenstandes dadurch erreicht, daß die Trennventile bzw. die Ventile mittelbar durch die der elektronischen Steuereinheit zugeführten Ausgangssignale der Sensoreinrichtung ansteuerbar sind.

Eine ohne Reibung bzw. Schließwege direkt ermittelbare Fahrerverzögerungswunscherkennung wird dadurch ermöglicht, daß die Sensoreinrichtung durch einen die auf das Bremsbetätigungspedal einwirkende Betätigungskraft erfassenden Kraftsensor gebildet ist.

Eine kostengünstige herstellbare, betriebssichere Ausführung des erfindungsgemäßen Bremsbetätigungssystems, besteht darin, daß die Sensoreinrichtung durch mindestens einen an den Hauptbremszylinder angeschlossenen Drucksensor gebildet ist. Dabei ist es besonders vorteilhaft, wenn der Drucksensor als Bestandteil der elektronischen Steuereinheit ausgebildet ist. Da außerhalb der elektronischen Steuereinheit keine Kabel- und Steckerverbindungen vorgesehen sind, wird dadurch eine Montagevereinfachung erreicht.

Eine reibungsarme Umwandlung einer Dreh- in eine Linearbewegung erfolgt insbesondere bei einer vorteilhaften Weiterbildung der Erfindung, bei der die Bremsdruck-geber durch Hydraulikzylinder gebildet sind, deren Kolben mittels elektrisch ansteuerbarer Gleichstrommotoren betätigbar sind, dadurch, daß die Betätigung mittels eines zwischen Kolben und Gleichstrommotor geschalteten Kugelgewindetriebs erfolgt. Dabei ist es sinnvoll, wenn die Spindel des Kugelgewindetriebs und die Welle des Gleichstrommotors ein Bauteil bilden bzw. wenn die Welle des Gleichstrommotors hohl ausgebildet ist und die Spindel des Kugelgewindetriebs aufnimmt. Durch diese Maßnahmen wird eine einfache Montage der Bremsdruckgeber bzw. eine einfache Ausbildung der Spindel erreicht. Zudem weisen die Bremsdruckgeber eine kurze Bauform auf.

Bei einer anderen vorteilhaften Weiterbildung des Erfindungsgegenstandes ist der Gleichstrommotor reversierbar ausgebildet. Durch diese Maßnahme werden hohe Druckabbaugeschwindigkeiten auch bei niedrigen Bremsdrücken erreicht. Außerdem zeichnet sich eine derartige Ausführung durch geringe Anfälligkeit gegen Reibeffekte bei einem Druckabbau sowie durch eine reduzierte axiale Baulänge aus.

Um die Ruhe- bzw. Bereitschaftstellung des Bremsdruckgeberkolbens genau zu definieren, sieht eine andere vorteilhafte Weiterbildung des Erfindungsgegenstandes vor, daß der Bremsdruckgeber-Stufenkolben zweiteilig ausgebildet ist und aus einem Ringkolben sowie einem im Ringkolben verschiebbar geführten, mit der Spindel in kraftübertragender Verbindung stehenden Innenkolben besteht, wobei der Ringkolben vom Innenkolben mitnehmbar ausgebildet ist.

Eine Aufnahme des bei Betätigung aus dem Hauptbremszylinder verdrängten Druckmittelvolumens wird nach einem weiteren vorteilhaften Merkmal dadurch gewährleistet, daß der Innenkolben im Ringkolben eine hydraulische Kammer begrenzt, die mit der ersten Arbeitskammer des Bremsdruckgebers in Verbindung steht.

Eine günstige Kraftübertragung vom Innenkolben auf den Ringkolben wird bei Ansteuerung des Bremsdruckgebers dadurch erreicht, daß am Innenkolben eine Kraftübertragungsfläche vorgesehen ist, die mit einem am Ende eines die Kammer mit der ersten Arbeitskammer verbindenden Kanals ausgebildeten Anschlag zusammenwirkt.

Bei einer hochdynamisch arbeitenden Ausführung, bei der keine Energiebedarfsspitzen-Problematik auftritt, sind die Bremsdruckgeber durch Hydraulikzylinder gebildet, deren Kolben mittels ventilgesteuerter, pneumatisch bzw. hydraulisch ansteuerbarer Linearantriebe betätigbar sind.

Dabei wird eine gute Regelbarkeit bei Reduzierung des erforderlichen Sensoraufwandes dadurch erreicht, daß die der Ansteuerung dienenden Ventile als Druckregelventile ausgebildet sind. Die insbesondere hydraulische Ansteuerung der Linearantriebe erfolgt vorzugsweise mittels einer einzigen Druckquelle, an die weitere Hydraulikverbraucher anschließbar sind. Alternativ können die Linearantriebe durch pneumatischen Hochdruck ansteuerbar sein. Eine derartige Ausführung nutzt die gute Speicherbarkeit der Luft und zeichnet sich vor allem durch einen geringen Bauraumbedarf aus.

Eine weitere Verbesserung der Regelbarkeit wird bei einer Weiterbildung der Erfindung dadurch erreicht, daß Weg-Spannungs-Wandler zum Erfassen der Position der Druckgeberkolben oder der axialen Bewegung der Spindel bzw. Mittel zum Erfassen der Winkelposition der Rotoren der Gleichstrommotoren vorgesehen sind.

Eine besonders gute Regelbarkeit, insbesondere im unteren Druckbereich wird bei einer weiteren Ausgestaltung des Erfindungsgegenstandes dadurch erreicht, daß die der Ansteuerung dienenden Ventile in einem Lageregelkreis integriert sind, der die Ausgangssignale der vorhin erwähnten Mittel verarbeitet.

Eine weitere Verbesserung der Regelbarkeit wird nach einem weiteren vorteilhaften Merkmal dadurch erreicht, daß Mittel (Drucksensoren) zum Sensieren des von den Druckgebern aufgebrachten Druckes vorgesehen sind, wobei die der Ansteuerung dienenden Ventile in einem Druckregelkreis integriert sind, der die Ausgangssignale der Drucksensoren verarbeitet

Eine optimale Gestaltung der Pedalkraft-Weg-Kennlinie unabhängig von der Druckmittelaufnahme der Radbremsen kann bei einer weiteren vorteilhaften Ausgestaltung der Erfindung dadurch erreicht werden, daß der erste (Primär-) Kolben des Hauptzylinders zweiteilig ausgeführt ist und aus einem Ringkolben sowie einem darin geführten Innenkolben besteht. Die Pedalkraft-Weg-Kennlinie kann insbesondere durch die Auslegung des Innenkolbendurchmessers angepaßt werden.

Eine definierte Ausgangsposition des Innenkolbens wird nach einem weiteren vorteilhaften Erfindungsmerkmal dadurch gewährleistet, daß der Innenkolben durch das Betätigungspedal direkt betätigbar und entgegen der Betätigungsrichtung mittels einer Druckfeder vorgespannt ist. Eine weitere Ausgestaltung der Erfindung sieht schließlich vor, daß der Innenkolben innerhalb des Ringkolbens einen hydraulischen Raum begrenzt, in dem die Druckfeder angeordnet ist und der mit dem ersten (Primär-)Druckraum in Verbindung steht.

Durch die Auslegung des hydraulischen Raumes kann der Übertragung von einer Bremsung mit intakten Bremsdruckgebern zu einer Notbremsung konstruktiv besonders günstig beinflußt werden.

Die Erfindung wird in der nachfolgenden Beschreibung von drei Ausführungsbeispielen unter Bezugnahme auf die beiliegende Zeichnung näher erläutert. In der Zeichnung zeigt:
- Fig. 1: ein Schaltbild einer ersten Ausführung des erfindungsgemäßen Bremsbetätigungssystems,
- Fig. 2: einen nach Fig. 1 im Bremsbetätigungssystem verwendbaren Bremsdruckgeber im Axialschnitt,
- Fig. 3: ein Schaltbild einer zweiten Ausführung des erfindungsgemäßen Bremsbetätigungssystems,
- Fig. 4: ein Schaltbild einer dritten Ausführung des erfindungsgemäßen Bremsbetätigungssystems, und
- Fig. 5: eine besonders vorteilhafte Ausführung eines bei dem erfindungsgemäßen Bremsbetätigungssystem verwendbaren Hauptbremszylinders.

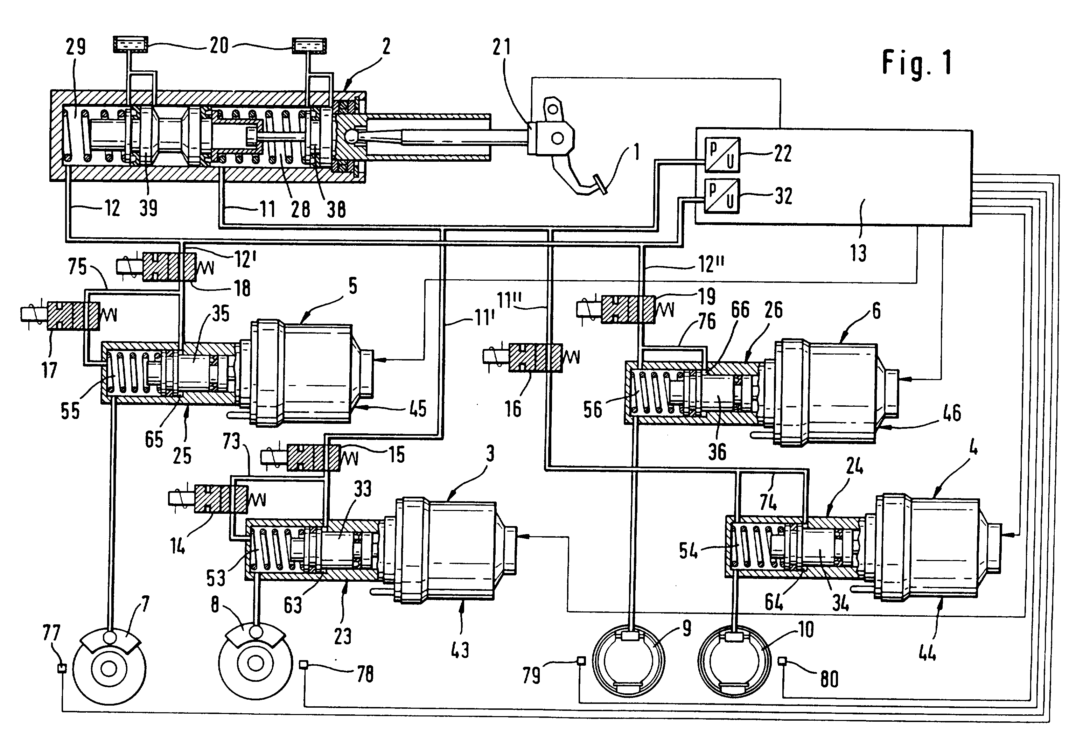

Das in Fig. 1 dargestellte, elektronisch regelbare Bremsbetätigungssystem nach der Erfindung ist für ein Fahrzeug mit Vorderradantrieb vorgesehen. Es besteht aus einem mittels eines Betätigungspedals 1 betätigbaren, zweikreisigen Hauptbremszylinder bzw.
Tandemhauptzylinder 2, der durch zwei Kolben 38,39 begrenzte, voneinander getrennte Druckräume 28,29 aufweist, die mit einem drucklosen Druckmittelvorratsbehälter 20 in Verbindung stehen. Der erste Druckraum (Primärdruckraum) 28 steht mittels einer ersten hydraulischen Leitung 11 einerseits in Verbindung mit einem elektrisch ansteuerbaren ersten Bremsdruckgeber 3, an den eine der Vorderachse zugeordnete hydraulische Radbremse 8 angeschlossen ist und andererseits mit einem elektrisch ansteuerbaren zweiten Bremsdruckgeber 4, an den eine der Hinterachse zugeordnete hydraulische Radbremse 10 angeschlossen ist. Der zweite Druckraum (Sekundärdruckraum) 29 steht über eine zweite hydraulische Leitung 12 einerseits in Verbindung mit einem elektrisch ansteuerbaren dritten Bremsdruckgeber 5, an den die andere, der Vorderachse zugeordnete hydraulische Radbremse 7 angeschlossen ist, und andererseits mit einem elektrisch ansteuerbaren vierten Bremsdruckgeber 6, an den die zweite, der Hinterrachse zugeordnete hydraulische Radbremse 9 angeschlossen ist. Alle vier Bremsdruckgeber 3,4,5,6 sind von ihrem Aufbau her gleich und bestehen aus je einem Hydraulikzylinder 23,24,25,26, in dem je ein Kolben 33,34,35,36 verschiebbar geführt ist, der durch je einen vorzugsweise reversierbaren Gleichstrommotor 43,44,45,46 antreibbar ist. Durch die Kolben 33,34,35,36 wird in den Hydraulikzylindern 23 bis 26 je eine erste Arbeitskammer 53,54,55,56 von je einer zweiten Arbeitskammer 63,64,65,66 getrennt. Während die hydraulischen Radbremsen 8,10,7,9 an die ersten Arbeitskammern 53,54,55,56 der Bremsdruckgeber 3 bis 6 direkt angeschlossen sind, sind zwischen den ersten (53...56) und den zweiten Arbeitskammern (63...66) hydraulische Verbindungen 73,74,75,76 vorgesehen, die bei den der Vorderachse zugeordneten Bremsdruckgebern 3,5 mittels elektromagnetisch betätigbarer Trennventile 14,17 absperrbar sind. In an die hydraulischen Leitungen 11,12 angeschlossene, zu den zweiten Arbeitskammern (63...66) hin führende Leitungsabschnitte 11',11",12',12" sind weitere, elektromagnetisch betätigbare Trennventile 15,16,17,18,19 eingefügt, die eine Trennung der Bremsdruckgeber 3 bis 6 von dem Tandemhauptzylinder 2 ermöglichen. Der gemeinsamen Ansteuerung der Gleichstrommotoren 43,44,45,46 sowie der Elektromagnetventile 14 bis 19 dient eine elektronische Steuereinheit 13, der als Eingangssignale die Ausgangssignale eines mit dem Betätigungspedal 1 zusammenwirkenden Bremslichtschalters 21, sowie zweier Drucksensoren 22,32 zugeführt werden, die an die Druckräume 28,29 des Tandemhauptzylinders 2 angeschlossen sind und die eine Fahrerverzögerungswunscherkennung ermöglichen. Dabei ist es besonders vorteilhaft, wenn die Drucksensoren 22,32 als Bestandteile der elektronischen Steuereinheit 13 ausgebildet sind. Zur Fahrerverzögerungswunscherkennung können jedoch auch andere Mittel, beispielsweise ein die Betätigungskraft am Betätigungspedal 1 sensierender Kraftsensor verwendet werden.

Außerdem sind den einzelnen, nicht gezeigten Rädern Radsensoren 77,78,79,80 zugeordnet, deren der jeweiligen Radgeschwindigkeit entsprechende Ausgangssignale als weitere Eingangsgrößen der elektronischen Steuereinheit 13 zugeführt werden.

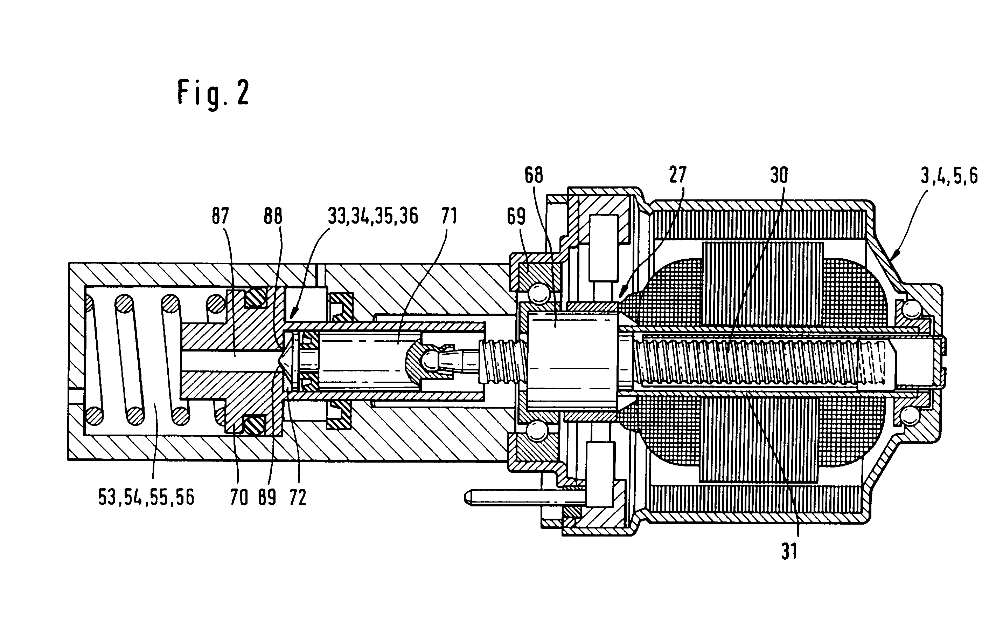

Wie insbesondere der Fig. 2 zu entnehmen ist, erfolgt die Betätigung des Kolbens 33,34,35,36 des Bremsdruckgebers 3,4,5,6 mittels eines Kugelgewinde- bzw. Spindel-Mutter-Triebs 27, dessen Spindel 30 verdrehgesichert in einer vorzugsweisen hohlen Welle 31 des Gleichstrommotors 43,44,45,46 angeordnet und dessen in kraftübertragender Verbindung mit der Welle 31 stehende Spindelmutter 68 in einem Radiallager, vorzugsweise einem Kugellager 69, gelagert ist. Der Bremsdruckgeberkolben 33...36 ist dabei vorzugsweise zweiteilig ausgebildet und besteht aus einem die erste Arbeitskammer 53,54,55,56 begrenzenden Ringkolben 70 sowie einem darin verschiebbar geführten, mit der Spindel 30 unlösbar verbundenen Innenkolben 71. Während die der ersten Arbeitskammer 53...56 abgewandte ringförmige Stirnfläche des Ringkolbens 70 die zweite Arbeitskammer 63,64,65,66 begrenzt, ist im Ringkolben ein Kanal 87 vorgesehen, der die erste Arbeitskammer 53,54,55,56 mit einer im Ringkolben 70 ausgebildeten, durch den Innenkolben 71 begrenzten hydraulischen Kammer 72 verbindet, die beim Druckabbau in einem Blockierschutz-Regelfall das aus dem Hauptbremszylinder 2 verdrängte Druckmittelvolumen aufnimmt. An dem der Kammer 72 zugewandten Ende des Kanals 87 ist ein Anschlag 88 ausgebildet, der mit einer am Innenkolben 71 vorgesehenen, vorzugsweise konischen Kraftübertragungsfläche 89 zusammenwirkt, die ein Mitnehmen des Ringkolbens 70 vom Innenkolben 71 ermöglicht.

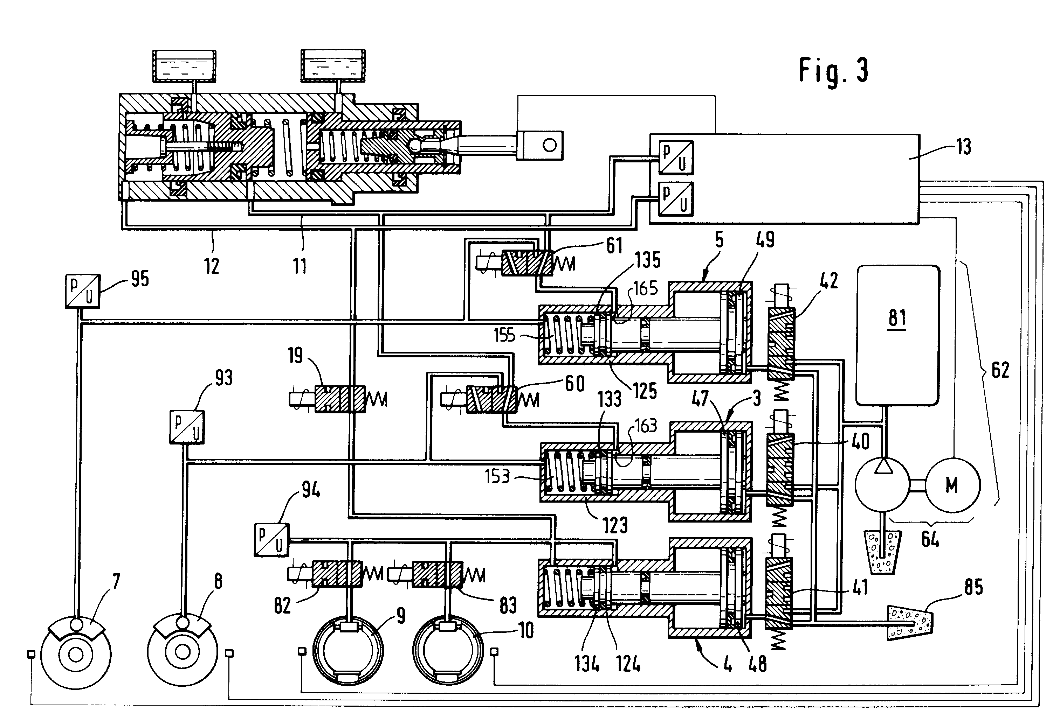

Bei der in Fig. 3 gezeigten zweiten Ausführung der Erfindung sind zwischen dem Hauptzylinder 2 und den den Vorderachs-Radbremsen 8,7 zugeordneten Bremsdruckgebern 3,5 elektromagnetisch betätigbare 3/2-Wegeventile 60,61 geschaltet, die funktionsmäßig die bei der in Fig. 1 dargestellten Ausführung verwendeten Ventile 14,15 bzw. 17,18 ersetzen und vorzugsweise als Dopppelsitzventile ausgeführt werden können. An den Bremsdruckgeber 4 sind dabei beide der Hinterachse zugeordneten Radbremsen 9,10 unter Zwischenschaltung je eines elektromagnetisch betätigbaren 2/2-Wegeventils 82,83 angeschlossen. Die Bremsdruckgeber 3,4,5 sind dabei als Hydraulikzylinder 123,124,125 ausgebildet, deren Kolben 133,134,135,136 mittels ventilgesteuerter pneumatisch ansteuerbarer Linearantriebe 47,48,49 betätigbar sind. Die Linearantriebe 47,48,49 sind über elektromagnetisch ansteuerbare 3/3-Wegeventile 40,41,42 an eine pneumatische Druckquelle 62 anschließbar, die durch einen Druckspeicher 81 sowie ein den Druckspeicher 81 aufladendes Motor-Pumpen-Aggregat 64 gebildet wird. Die 3/3 Wegeventile 40,41,42 sind dabei vorzugsweise als Druckregelventile ausgebildet, die in ihrer dritten Schaltstellung die Linearantriebe 47,48,49 von der Druckquelle 62 trennen und deren Verbindung mit der Atmosphäre (s. Schalldämpfer 85) herstellen.

Wie der Fig. 3 weiter zu entnehmen ist, sind an den zu den Radbremsen 7 bis 10 führenden Leitungsabschnitten Drucksensoren 93,94,95 angeschlossen, die die von den Bremsdruckgebern 3,4,5, aufgebrachten Drücke sensieren und deren Ausgangssignale der elektronischen Steuereinheit 13 zugeführt werden, die Steuersignale für die Druckregelventile 40,41,42 erzeugt, so daß diese in einem Druckregelkreis integriert sind. Es ist allerdings auch denkbar, die pneumatischen Druckregelventile 40,41,42 derart auszubilden, daß deren elektromagnetische Betätigungskraft dem im Linearantrieb 47,48,49 eingesteuerten pneumatischen Druck entgegenwirkt. Durch die Verwendung der den Radbremsen 9,10 zugeordneten Ventile 82,83 wird außerdem eine Multiplex-Druckregelung an der Hinterachse ermöglicht.

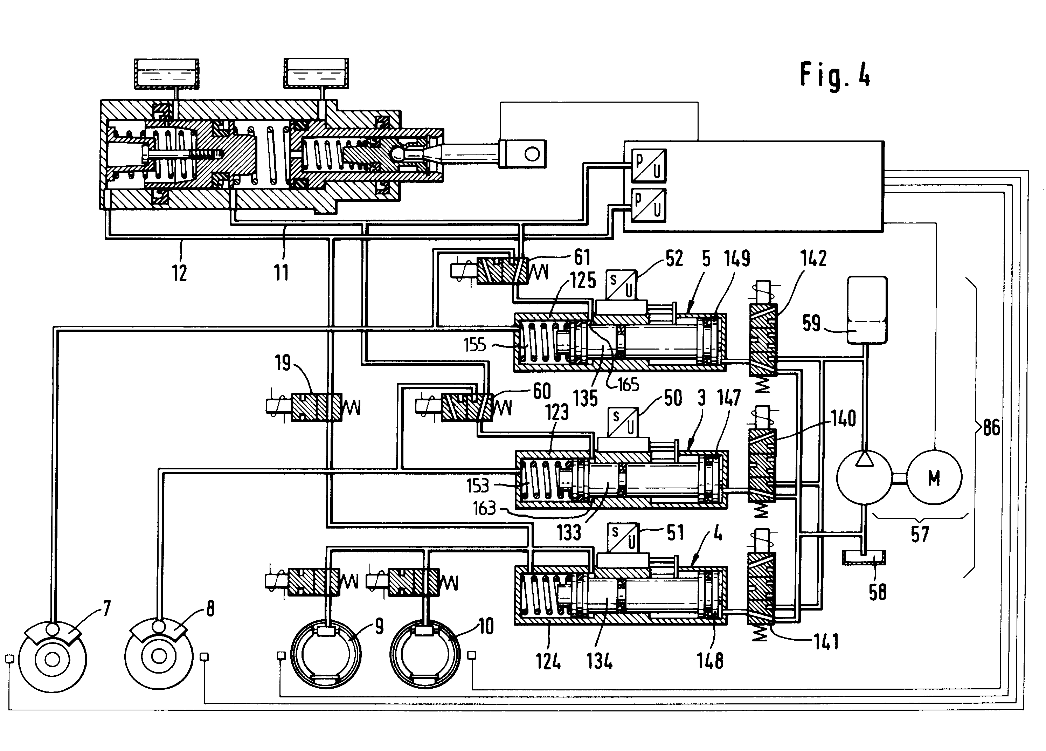

In Fig. 4 ist eine dritte Ausführungsform des erfindungsgemäßen Bremsbetätigungssystems dargestellt, bei der zur Betätigung der Druckgeberkolben 133,134,135 ventilgesteuerte, hydraulisch ansteuerbare Linearantriebe 147,148,149 eingesetzt werden. Die Ansteuerung erfolgt über hydraulische 3/3-Wege-Druckregelventile 140,141,142 mittels einer hydraulischen Druckquelle 86, an die auch weitere, im Fahrzeug vorhandene hydraulische Verbraucher anschließbar sind. Die hydraulische Druckquelle 86 besteht aus einem hydraulischen Motor-Pumpen-Aggregat 57, einem an die Saugseite der Pumpe angeschlossenen drucklosen Druckmittelvorratsbehälter 58 sowie einem an die Druckseite der Pumpe angeschlossenen hydraulischen Druckspeicher 59. In der ersten stromlosen Schaltstellung der Regelventile 140,141,142 besteht eine Verbindung zwischen den hydraulischen Linearantrieben 147,148,149 und dem Druckmittelvorratsbehälter 58, während die Verbindung zwischen den hydraulischen Linearantrieben 147,148,149 und der Druckseite der Pumpe bzw. dem Druckspeicher 59 gesperrt ist. In der zweiten Schaltstellung sind die Linearantriebe 147,148,149 sowohl vom Druckmittelvorratsbehälter 50 als auch von der Pumpe bzw. dem Druckspeicher 59 getrennt, so daß eine Druckhaltephase realisiert wird. In der dritten Schaltung wird eine Verbindung der Linearantriebe mit der Druckseite der Pumpe bzw. dem Druckspeicher 59 bei deren gleichzeitiger Trennung vom Druckmittelvorratsbehälter 58 hergestellt, so daß ein Druckaufbau in den Radbremsen 7 bis 10 stattfindet. Die Position der Bremsdruckgeberkolben 133,134,135 wird durch Weg-Spannungs-Wandler 50,51,52 direkt erfaßt, deren Ausgangssignale der elektronischen Steuereinheit 13 zugeführt werden, so daß die Druckregelventile 140,141,142 in einem Lageregelkreis integriert sind.

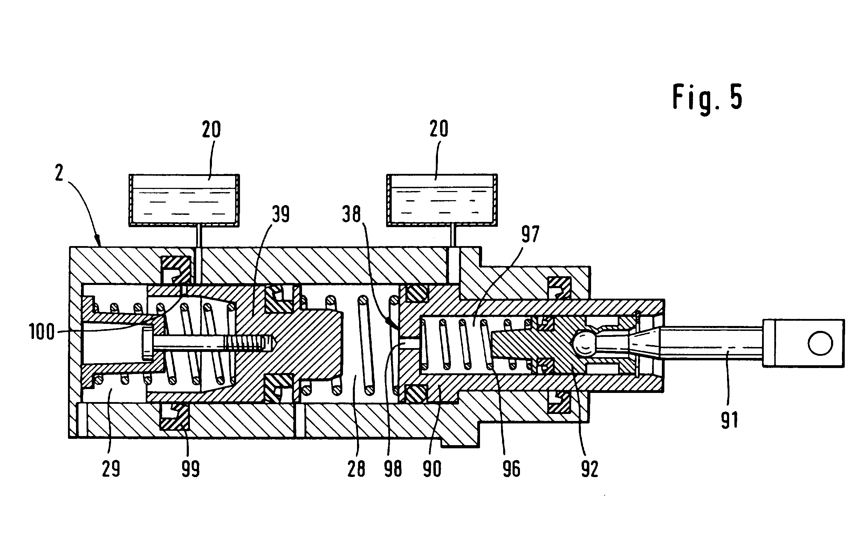

Bei der in Fig. 5 dargestellten vorteilhaften Ausführung des Tandemhauptzylinders 2 ist der erste (Primär-) Kolben 38 zweiteilig ausgebildet und besteht aus einem Ringkolben 90 größeren Durchmessers, in dem ein durch das Betätigungspedal 1 über eine Kolbenstange 91 direkt betätigbarer Innenkolben 92 verschiebbar geführt ist. Der entgegen der Betätigungsrichtung mittels einer Druckfeder 96 vorgespannte Innenkolben 92 begrenzt innerhalb des Ringkolbens 90 einen hydraulischen Raum 97, der durch eine im Ringkolben 90 vorgesehene Axialbohrung 98 mit dem ersten (Primär-) Druckraum 28 verbunden ist. Da der Tandemhauptzylinder 2 bei intaktem System vor allem der Erzeugung von Fahrerverzögerungswunschsignalen dient, wird bei der Betätigung lediglich der Innenkolben 92 gegen die Wirkung der Druckfeder 96 verschoben, während der Ringkolben 90 in seiner hinteren Stellung stehen bleibt. Bei einem Ausfall der Bremsdruckgeber 3,4,5,6 erfüllt der Ringkolben 90 eine Notfunktion, indem er vom Innenkolben 92 mitgenommen wird und über seine größere Fläche einen Druckaufbau in den an den Primärdruckraum 28 angeschlossenen Radbremsen ermöglicht.

Der den zweiten (Sekundär-) Druckraum 25 begrenzende Kolben 39 wirkt bei der in Fig. 5 gezeigten Ausführung mit einer im Gehäuse des Tandemhauptzylinders 2 unbeweglich angeordneten Dichtmanschette 99 zusammen, die bei Betätigung von einer im Sekundärkolben 39 vorgesehenen Radialbohrung 100 überfahren wird, die sonst eine Verbindung zwischen dem Sekundärdruckraum 29 und dem Druckmittelsvorratsbehälter 20 herstellt.

Das insbesondere in Fig. 1 der Zeichnung dargestellte Bremsbetätigungssystem funktioniert wie folgt:

Wird ein Bremsvorgang durch Niederdrücken des Bremsbetätigungspedals 1 eingeleitet, so wird der Betätigungszustand vom Bremslichtschalter 21 erkannt und der elektronischen Steuereinheit 13 mitgeteilt, deren Steuersignale ein Umschalten der Trennventile 14,16,17,19, und dadurch eine Trennung der Hauptzylinderdruckräume 28,29 von den Radbremsen 7 bis 10 bewirken. Es besteht jedoch eine hydraulische Verbindung zwischen den Tandemhauptzylinder-Druckräumen 28,29 und den zweiten Arbeitskammern 63,65 der Bremsdruckgeber 3,5, so daß deren Kolben 33,35 mit dem vom Fahrer im Tandemhauptzylinder 2 eingesteuerten Druck beaufschlagt werden. Durch die Drucksensoren 22 und 32 erfolgt eine zweite Meldung des Fahrerverzögerungswunsches an die elektronische Steuereinheit 13, die mit der darin installierten Bremskraftverteilung die gewünschten Bremsmomente an den Fahrzeugachsen errechnet. Die den errechneten Bremsmomenten entsprechenden Steuersignale werden den Gleichstrommotoren 43,44,45,46 der Bremsdruckgeber 3,4,5,6 zugeführt, die ein Verschieben der Bremsdruckgeberkolben 33,34,35,36 in Betätigungsrichtung und somit eine Druckerhöhung in den Radbremsen 7 bis 10 einleiten. Das für den Fahrer gewöhnliche, bei einem Bremsvorgang spürbare Pedalgefühl wird durch die Volumenaufnahme der der Vorderachse zugeordneten Arbeitskammern 63,65 gewährleistet. Ein Bremsdruckaufbau an der Hinterachse kann ausschließlich durch Betätigung der zugeordneten Bremsdruckgeber 4,6 erreicht werden.

Ein Druckabbau erfolgt durch Zurückfahren der Kolben 33,34,35,36. Wird in einem ABS-Regelfall beispielsweise ein Blockieren der Vorderräder erkannt, so erzeugt die elektronische Steuereinheit 13 Steuersingale, die ein Schließen der Trennventile 15,18 sowie ein Öffnen der vorhin geschlossenen Trennventile 14,17 bewirken. Eine Druckhaltephase wird realisiert, indem sämtliche Trennventile 14,15,17,18 in ihre Sperrstellung umgeschaltet werden. Ein Druckaufbau in der Regelung erfolgt durch Öffnen der Trennventile 14,17 sowie aktive Drehrichtungsumkehr der Gleichstrommotoren 43,45. Eine Aufnahme des aus dem Hauptbremszylinder 2 in die zweiten Arbeitskammern 63,65 verdrängten Druckmittelvolumens wird durch eine Vergrößerung der Kammer 72 durch aktives Zurückfahren des Innenkolbens 71 (Fig. 2) ermöglicht.

Eine Bremsdruckregelung an der Hinterachse wird durch Betätigung der Gleichstrommotoren 44,46 in beiden Drehrichtungen realisiert.

Eine ABS-Regelung wird demnach radindividuell im Regelmodus mit den Raddrehzahlsensoren 77,78,79,80 durchgeführt, wobei die Bremsdruckmodulation an der Hinterachse beispielsweise nach dem "select-low"-Prinzip erfolgen kann.

Bei einem Ausfall der Elektronik/Fahrzeugelektrik gehen alle Ventile in den stromlosen Zustand. Dabei werden beide der Vorderachse zugeordneten Radbremsen 7,8 sowie die der Hinterachse zugeordneten Radbremsen 9,10 über die stromlos offenen Ventile 14,15,16,17,18,19 mit dem Tandemhauptzylinder 2 verbunden, so daß die gesetzlich geforderten Bestimmungen bei Ausfall der Elektronik erfüllt werden.

## Patentansprüche

1. Elektronisch regelbares, blockiergeschütztes Bremsbetätigungssystem für Kraftfahrzeuge, mit einem mittels eines Betätigungspedals (1) betätigbaren, zweikreisigen Hauptbremszylinder (2), mit durch eine elektronische Steuereinheit (13) ansteuerbaren Bremsdruckgebern (3,4,5,6), die je einen in einer Zylinderbohrung aus einer Ausgangsposition verschiebbaren Stufenkolben (33,34,35,36) aufweisen, der eine durch die größere Kolbenfläche begrenzte erste Arbeitskammer (53,54,55,56), an die je eine Radbremse (8,10,7,9) des Fahrzeugs direkt und der Hauptzylinder (2) über eine absperrbare hydraulische Verbindung (11',11",12',12") angeschlossen sind, von einer durch die kleinere Kolbenfläche begrenzten zweiten Arbeitskammer (63,64,65,66) trennt, die mit dem Hauptzylinder (2) verbunden ist, wobei der Stufenkolben (33,34,35,36) im Sinne einer Bremsdruckerzeugung bzw. -verstärkung betätigbar ist und die Ausgangsposition des Stufenkolbens (33,34,35,36, 133,134,135,136) einen Rückhub entgegen dessen Betätigungsrichtung im Sinne einer Bremsdruckerzeugung bzw. -verstärkung ermöglicht, dadurch **gekennzeichnet**, daß die Verbindung zwischen der ersten Arbeitskammer (53,55) und dem Hauptbrems-zylinder (2) über ein erstes (14,17) und ein zweites elektromagnetisch betätigbares Trennventil (15,18) erfolgt, und daß die Verbindung (11',12') zwischen dem Hauptbremszylinder (2) und der zweiten Arbeitskammer (63,65) ausschließlich über das zweite Trennventil (15,18) erfolgt, wobei bei einem Druckabbau während einer ABS-Regelung die erste (53,55) und die zweite Arbeitskammer (63,65) miteinander hydraulisch verbunden sind, während die Verbindung zwischen der zweiten Arbeitskammer (63,65) und dem Hauptbremszylinder (2) geschlossen bleibt.

2. Elektronisch regelbares,blockiergeschütztes Bremsbetätigungssystem für Kraftfahrzeuge, mit einem mittels eines Betätigungspedals (1) betätigbaren, zweikreisigen Hauptbremszylinder (2), mit durch eine elektronische Steuereinheit (13) ansteuerbaren Bremsdruckgebern (3,5), die je einen in einer Zylinderbohrung aus einer Ausgangsposition verschiebbaren Stufenkolben (133,135) aufweisen, der eine durch die größere Kolbenfläche begrenzte erste Arbeitskammer (153,155), an die je eine Radbremse (8,7) des Fahrzeugs direkt angeschlossen ist, von einer durch die kleinere Kolbenfläche begrenzten zweiten Arbeitskammer (163,165) trennt, die mit dem Hauptzylinder (2) verbunden ist, wobei der Stufenkolben (133,135) im Sinne einer Bremsdruckerzeugung betätigbar ist und die Ausgangsposition des Stufenkolbens (133,135) einen Rückhub entgegen dessen Betätigungsrichtung im Sinne einer Bremsdruckerzeugung ermöglicht, dadurch **gekennzeichnet**, daß zwischen der zweiten Arbeitskammer (163,165) und dem Hauptbremszylinder (2) ein elektromagnetisch betätigbares Ventil (60,61) vorgesehen ist, in dessen erster Schaltstellung die Arbeitskammern (153,155,163,165) voneinander getrennt sind und die Verbindung zwischen der zweiten Arbeitskammer (163,165) und dem Hauptbremszylinder (2) geöffnet ist und in dessen zweiter Schaltstellung der Hauptbremszylinder (2) von der zweiten Arbeitskammer (163,165) getrennt ist und eine Verbindung zwischen der ersten (153,155) und der zweiten Arbeitskammer (163,165) erfolgt, wobei bei einem Druckabbau während einer ABS-Regelung die erste (153,155) und die zweite Arbeitskammer (163,165) miteinander hydraulisch verbunden sind, während die Verbindung zwischen der zweiten Arbeitskammer (163,165) und dem Hauptbremszylinder (2) geschlossen bleibt.

3. Elektronisch regelbares Bremsbetätigungssystem nach Anspruch 1 oder 2, dadurch **gekennzeichnet**, daß eine Sensoreinrichtung (21,22,32) zur Erkennung des Fahrerverzögerungswunsches vorgesehen ist.

4. Elektronisch regelbares Bremsbetätigungssystem nach Anspruch 1 oder 1 und 3, dadurch **gekennzeichnet**, daß die Trennventile (14,15;17,18) gemeinsam betätigbar sind.

5. Elektronisch regelbares Bremsbetätigungssystem nach Anspruch 2, dadurch **gekennzeichnet**, daß das Ventil (60,61) als ein 3/2-Wegeventil ausgebildet ist.

6. Elektronisch regelbares Bremsbetätigungssystem nach Anspruch 5, dadurch **gekennzeichnet**, daß das 3/2-Wegeventil (60,61) als ein Doppelsitzventil ausgebildet ist.

7. Elektronisch regelbares Bremsbetätigungssystem nach wenigstens Anspruch 3, dadurch **gekennzeichnet**, daß sowohl die Trennventile (14,15,17,18) bzw. die Ventile (60,61) mittelbar durch die der elektronischen Steuereinheit (3) zugeführten Ausgangssignale der Sensoreinrichtung (21,22,32) ansteuerbar sind.

8. Elektronisch regelbares Bremsbetätigungssystem nach wenigstens Anspruch 3, dadurch **gekennzeichnet**, daß die Sensoreinrichtung durch einen die auf das Bremspedal (1) einwirkende Betätigungskraft erfassenden Kraftsensor gebildet ist.

9. Elektronisch regelbares Bremsbetätigungssystem nach wenigstens Anspruch 3 dadurch **gekennzeichnet**, daß die Sensoreinrichtung durch mindestens einen an den Hauptbremszylinder (2) angeschlossenen Drucksensor (22,32) gebildet ist.

10. Elektronisch regelbares Bremsbetätigungssystem nach Anspruch 9, dadurch **gekennzeichnet**, daß der Drucksensor (22,32) als Bestandteil der elektronischen Steuereinheit (13) ausgebildet ist.

11. Elektronisch regelbares Bremsbetätigungssystem nach einem der vorhergehenden Ansprüche, wobei die Bremsdruckgeber (3,4,5,6) durch Hydraulikzylinder (23,24,25,26) gebildet sind, wobei die Stufenkolben (33,34,35,36) mittels elektrisch ansteuerbarer Gleichstrommotoren (43,44,45,46) betätigbar sind, dadurch **gekennzeichnet**, daß die Betätigung mittels eines zwischen Stufenkolben (33,34,35,36) und Gleichstrommotor (43,44,45,46) geschalteten Kugelgewindetriebs (27) erfolgt.

12. Elektronisch regelbares Bremsbetätigungssystem nach Anspruch 11, dadurch **gekennzeichnet**, daß die Spindel (30) des Kugelgewindetriebs (27) und die Welle (31) des Gleichstrommotors (43,44,45,46) ein Bauteil bilden.

13. Elektronisch regelbares Bremsbetätigungssystem nach Anspruch 12, dadurch **gekennzeichnet**, daß die Welle (31) des Gleichstrommotors (43,44,45,46) hohl ausgebildet ist und die Spindel (30) des Kugelgewindetriebs (27) aufnimmt.

14. Elektronisch regelbares Bremsbetätigungssystem nach einem der Ansprüche 11 bis 13, dadurch **gekennzeichnet**, daß der Gleichstrommotor (43,44,45,46) reversierbar ausgebildet ist.

15. Elektronisch regelbares Bremsbetätigungssystem nach einem der Ansprüche 11 bis 14, dadurch **gekennzeichnet**, daß der Bremsdruckgeber-Stufenkolben (33...36) zweiteilig ausgebildet ist und aus einem Ringkolben (70) sowie einem im Ringkolben (70) verschiebbar geführten, mit der Spindel (30) in kraftübertragender Verbindung stehenden Innenkolben (71) besteht, wobei der Ringkolben (70) vom Innenkolben (71) mitnehmbar ausgebildet ist.

16. Elektronisch regelbares Bremsbetätigungssystem nach Anspruch 15, dadurch **gekennzeichnet**, daß der Innenkolben (71) im Ringkolben (70) eine hydraulische Kammer (72) begrenzt, die mit der ersten Arbeits-kammer (53,54,55,56) des Bremsdruckgebers (3,4,5,6) in Verbindung steht.

17. Elektronisch regelbares Bremsbetätigungssystem nach Anspruch 16, dadurch **gekennzeichnet**, daß am Innenkolben (71) eine Kraftübertragungsfläche (89) vorgesehen ist, die mit einem am Ende eines die Kammer (72) mit der ersten Arbeitskammer (53,54,55,56) verbindenden Kanals (87) ausgebildeten Anschlag (88) zusammenwirkt.

18. Elektronisch regelbares Bremsbetätigungssystem nach einem der Ansprüche 1 bis 9, dadurch **gekennzeichnet**, daß die Bremsdruckgeber (3,4,5,6) durch Hydraulikzylinder (123,124,125) gebildet sind, wobei die Stufenkolben (133,134,135) mittels ventilgesteuerter, pneumatisch bzw. hydraulisch ansteuerbarer Linearantriebe (47,48,49 bzw. 147,148,149) betätigbar sind.

19. Elektronisch regelbares Bremsbetätigungssystem nach Anspruch 18, dadurch **gekennzeichnet**, daß die der Ansteuerung dienenden Ventile (40,41,42, 140,141,142) als Druckregelventile ausgebildet sind.

20. Elektronisch regelbares Bremsbetätigungssystem nach Anspruch 18 oder 19, dadurch **gekennzeichnet**, daß die hydraulische Ansteuerung der Linearantriebe (147,148,149) mittels einer einzigen Druckquelle (86) erfolgt, an die weitere Hydraulikverbraucher anschließbar sind.

21. Elektronisch regelbares Bremsbetätigungssystem nach Anspruch 18 oder 19, dadurch **gekennzeichnet**, daß die Ansteuerung der Linearantriebe (47,48,49) durch pneumatischen Hochdruck erfolgt.

22. Elektronisch regelbares Bremsbetätigungssystem nach einem der vorhergehenden Ansprüche, dadurch **gekennzeichnet**, daß Mittel (50,51,52) zum Erfassen der Position der Druckgeberkolben (133,134,135) vorgesehen sind.

23. Elektronisch regelbares Bremsbetätigungssystem nach Anspruch 22, dadurch **gekennzeichnet**, daß die Mittel durch die axiale Bewegung der Spindel (30) erfassende Wegsensoren gebildet sind.

24. Elektronisch regelbares Bremsbetätigungssystem nach Anspruch 22, dadurch **gekennzeichnet**, daß die Mittel durch Weg-Spannungs-Wandler gebildet sind.

25. Elektronisch regelbares Bremsbetätigungssystem nach einem der vorhergehenden Ansprüche 11 bis 17, dadurch **gekennzeichnet**, daß Mittel zum Erfassen der Winkelposition der Rotoren der Gleichstrommotoren (43,44,45,46) vorgesehen sind.

26. Elektronisch regelbares Bremsbetätigungssystem nach wenigstens Anspruch 18 in Verbindung mit Anspruch 22, 23,24 oder 25, dadurch **gekennzeichnet**, daß die der Ansteuerung dienenden Ventile (140,141,142) in einem Lageregelkreis integriert sind, der die Ausgangssignale der Mittel (50,51,52) verarbeitet.

27. Elektronisch regelbares Bremsbetätigungssystem nach einem der vorhergehenden Ansprüche, dadurch **gekennzeichnet**, daß Mittel (93,94,95) zum Sensieren des von den Bremsdruckgebern (3,4,5) aufgebrachten Druckes vorgesehen sind.

28. Elektronisch regelbares Bremsbetätigungssystem nach Anspruch 27 dadurch **gekennzeichnet**, daß die Mittel als Drucksensoren ausgebildet sind.

29. Elektronisch regelbares Bremsbetätigungssystem nach Anspruch 18 in Verbindung mit Anspruch 27 oder 28, dadurch **gekennzeichnet**, daß die der Ansteuerung dienenden Ventile (40,41,42) in einem Druckregelkreis integriert sind, der die Ausgangssignale der Mittel (93,94,95) verarbeitet.

30. Elektronisch regelbares Bremsbetätigungssystem nach einem der vorhergehenden Ansprüche, dadurch **gekennzeichnet**, daß der erste pedalseitige Kolben (38) des Hauptbremszylinders (2) zweiteilig ausgeführt ist und aus einem Ringkolben (90) sowie einem darin geführten Innenkolben (92) besteht.

31. Elektronisch regelbares Bremsbetätigungssystem nach Anspruch 30, dadurch **gekennzeichnet**, daß der Innenkolben (92) durch das Betätigungspedal (1) direkt betätigbar und entgegen der Betätigungsrichtung mittels einer Druckfeder (96) vorgespannt ist.

32. Elektronisch regelbares Bremsbetätigungssystem nach Anspruch 31, dadurch **gekennzeichnet**, daß der Innenkolben (92) innerhalb des Ringkolbens (90) einen hydraulischen Raum (97) begrenzt, in dem die Druckfeder (96) angeordnet ist und der mit dem ersten pedalseitigen Druckraum (28) in Verbindung steht.

## Claims

1. Electronically controllable anti-lock brake actuation system for automotive vehicles, including a dual-circuit master brake cylinder (2) operable by an actuating pedal (1), braking pressure generators (3,4,5,6) actuatable by an electronic control unit (13), each of the braking pressure generators having a stepped piston (33,34,35,36) slidable in a cylinder bore from an initial position, each piston separating a first working chamber (53,54,55,56), which is confined by the large piston surface and to which each one wheel brake (8,10,7,9) of the vehicle is connected directly and the master cylinder (2) is connected by way of a closable hydraulic connection (11',11",12',12"), from a second working chamber (63,64,65,66) which is confined by the small piston surface and is connected to the master cylinder (2), wherein the stepped piston (33,34,35,36) is operable to achieve braking pressure generation or boosting, and the initial position of the stepped piston (33,34,35,36,133,134,135,136) permits a return stroke in opposition to its actuating direction to achieve braking pressure generation or boosting,
**characterized** in that the connection between the first working chamber (53,55) and the master brake cylinder (2) is established by way of a first (14,17) and a second electromagnetically operable separating valve (15,18), and in that the connection (11',12') between the master brake cylinder (2) and the second working chamber (63,65) is effected exclusively by way of the second separating valve (15,18), wherein on pressure reduction during ABS control operations the first (53,55) and the second working chambers (63,65) are hydraulically interconnected, and the connection between the second working chamber (63,65) and the master brake cylinder (2) remains closed.

2. Electronically controllable anti-lock brake actuation system for automotive vehicles, including a dual-circuit master brake cylinder (2) operable by an actuating pedal (1), braking pressure generators (3,5) actuatable by an electronic control unit (13), each of the braking pressure generators having a stepped piston (133,135) slidable in a cylinder bore from an initial position, each piston separating a first working chamber (153,155), which is confined by the large piston surface and to which each one wheel brake (8,7) of the vehicle is connected directly, from a second working chamber (163,165) which is confined by the small piston surface and is connected to the master cylinder (2), wherein the stepped piston (133,135) is operable to achieve braking pressure generation, and the initial position of the stepped piston (133,135) permits a return stroke in opposition to its actuating direction to achieve braking pressure generation,
**characterized** in that an electromagnetically operable valve (60,61) is interposed between the second working chamber (163,165) and the master brake cylinder (2), and the working chambers (153,155,163,165) are separated from each other and the connection between the second working chamber (163,165) and the master brake cylinder (2) is open in the valve's first switch position and, in the valve's second switch position, the master brake cylinder (2) is isolated from the second working chamber (163,165) and a connection is established between the first (153,155) and the second working chamber (163,165), wherein on pressure reduction during ABS control operations the first (153,155) and the second working chambers (163,165) are hydraulically interconnected, and the connection between the second working chamber (163,165) and the master brake cylinder (2) remains closed.

3. Electronically controllable brake actuation system as claimed in claim 1 or claim 2,
**characterized** in that a sensor device (21,22,32) for identification of the driver's wish for deceleration is provided.

4. Electronically controllable brake actuation system as claimed in claims 1, or 1 and 3,
**characterized** in that the separating valves (14,15; 17,18) are jointly operable.

5. Electronically controllable brake actuation system as claimed in claim 2,
**characterized** in that the valve (60,61) is configured as a three-way/two-position directional control valve.

6. Electronically controllable brake actuation system as claimed in claim 5,
**characterized** in that the three-way/two-position directional control valves (60,61) are configured as double seat valves.

7. Electronically controllable brake actuation system as claimed in at least claim 3,
**characterized** in that the separating valves (14,15,17,18) and the valves (60,61) are operable indirectly by the output signals of the sensor device (21,22,32) conducted to the electronic control unit (3).

8. Electronically controllable brake actuation system as claimed in at least claim 3,
**characterized** in that the sensor device is configured as a force sensor sensing the actuating force applied to the brake pedal (1).

9. Electronically controllable brake actuation system as claimed in at least claim 3,
**characterized** in that the sensor device is at least one pressure sensor (22,32) connected to the master brake cylinder (2).

10. Electronically controllable brake actuation system as claimed in claim 9,
**characterized** in that the pressure sensor (22,32) is a part of the electronic control unit (3).

11. Electronically controllable brake actuation system as claimed in any one of the preceding claims, wherein the braking pressure generators (3,4,5,6) are provided by hydraulic cylinders (23,24,25,26) and the stepped pistons (33,34,35,36) are operable by electrically drivable d.c. motors (43,44,45,46),
**characterized** in that the operation is effected by a roller-and-thread gear (27) interposed between the pistons (33,34,35,36) and the d.c. motor (43,44,45,46).

12. Electronically controllable brake actuation system as claimed in claim 11,
**characterized** in that the spindle (30) of the roller-and-thread gear (27) and the shaft (31) of the d.c. motor (43,44,45,46) form a component part.

13. Electronically controllable brake actuation system as claimed in claim 12,
**characterized** in that the shaft (31) of the d.c. motor (43,44,45,46) is hollow and accommodates the spindle (30) of the roller-and-thread gear (27).

14. Electronically controllable brake actuation system as claimed in any one of claims 11 to 13, **characterized** in that the d.c. motor (43,44,45,46) is reversible.

15. Electronically controllable brake actuation system as claimed in any one of claims 11 to 14,
**characterized** in that the stepped piston (33-36) of the braking pressure generator has a bipartite design and includes an annular piston (70) and an internal piston (71) which is slidable in the annular piston (70) and in force-transmitting connection with the spindle (30), wherein the annular piston (70) is designed so as to be entrained by the internal piston (71).

16. Electronically controllable brake actuation system as claimed in claim 15,
**characterized** in that the internal piston (71) in the annular piston (70) confines a hydraulic chamber (72) which is connected to the first working chamber (53,54,55,56) of the braking pressure generator (3,4,5,6).

17. Electronically controllable brake actuation system as claimed in claim 16,
**characterized** in that the internal piston (71) includes a force-transmitting surface (89) to interact with a stop (88) that is arranged on the end of a duct (87) which connects the chamber (72) to the first working chamber (53,54,55,56).

18. Electronically controllable brake actuation system as claimed in any one of claims 1 to 9,
**characterized** in that the braking pressure generators (3,4,5,6) are hydraulic cylinders (123,124,125), and the stepped pistons (133,134,135) are operable by valve-controlled, pneumatically or hydraulically actuatable linear drives (47,48,49 or 147,148,149).

19. Electronically controllable brake actuation system as claimed in claim 18,
**characterized** in that the valves (40,41,42,140,141,142) used for the actuation are configured as pressure control valves.

20. Electronically controllable brake actuation system as claimed in claim 18 or claim 19,
**characterized** in that the hydraulic actuation of the linear drives (147,148,149) is performed by one single pressure source (86), to which further hydraulic consumers can be connected.

21. Electronically controllable brake actuation system as claimed in claim 18 or claim 19,
**characterized** in that the linear drives (47,48,49) are actuated by high pneumatic pressure.

22. Electronically controllable brake actuation system as claimed in any one of the preceding claims,
**characterized** in that means (50,51,52) are provided to determine the position of the pressure generator pistons (133,134,135).

23. Electronically controllable brake actuation system as claimed in claim 22,
**characterized** in that the means are configured as travel sensors determining the axial movement of the spindle (30).

24. Electronically controllable brake actuation system as claimed in claim 22,
**characterized** in that the means are travel/voltage converters.

25. Electronically controllable brake actuation system as claimed in any one of the preceding claims 11 to 17,
**characterized** in that a means is provided to determine the angular position of the rotors of the d.c. motors (43,44,45,46).

26. Electronically controllable brake actuation system as claimed in at least claim 18 in conjunction with claim 22, 23, 24, or 25,
**characterized** in that the valves (140,141,142) used for the actuation are integrated in a position control circuit processing the output signals of the means (50,51,52).

27. Electronically controllable brake actuation system as claimed in any one of the preceding claims,
**characterized** in that means (93,94,95) are provided to sense the pressure generated by the braking pressure generators (3,4,5).

28. Electronically controllable brake actuation system as claimed in claim 27,
**characterized** in that the means are pressure sensors.

29. Electronically controllable brake actuation system as claimed in claim 18 in conjunction with claim 27 or claim 28,
**characterized** in that the valves (40,41,42) used for the actuation are integrated in a pressure control circuit which processes the output signals of the means (93,94,95).

30. Electronically controllable brake actuation system as claimed in any one of the preceding claims,
**characterized** in that the first pedal-side piston (38) of the master cylinder (2) has a bipartite design and includes an annular piston (90) and an internal piston (92) guided in the annular piston.

31. Electronically controllable brake actuation system as claimed in claim 30,
**characterized** in that the internal piston (92) is directly operable by the actuating pedal (1) and is biassed by a compression spring (96) in opposition to the actuating direction.

32. Electronically controllable brake actuation system as claimed in claim 31,
**characterized** in that the internal piston (92) confines within the annular piston (90) a hydraulic chamber (97) which houses the compression spring (96) and is connected to the first pedal-side pressure chamber (28).

## Revendications

1. Système d'actionnement de frein réglable par voie électronique et protégé contre un blocage, pour véhicules automobiles, comportant un maître-cylindre de frein (2) à deux circuits, qui peut être actionné au moyen d'une pédale d'actionnement (1), des générateurs de la pression de freinage (3,4,5,6), qui peuvent être commandés par une unité de commande électronique (13) et qui possèdent chacun un piston étagé (33,34,35,36), qui est déplaçable dans un perçage cylindrique à partir d'une position de départ et qui sépare une première chambre de travail (53,54,55,56), qui est limitée par la surface la plus étendue du piston et à laquelle un frein de roue respectif (8,10,7,9) du véhicule est raccordé directement et à laquelle le maître-cylindre (2) est raccordé par l'intermédiaire d'une liaison hydraulique (11',11",12',12") pouvant être bloquée, par rapport à une seconde chambre de travail (63,64,65,66) limitée par la surface la plus petite du piston et qui est reliée au maître-cylindre (2), et dans lequel le piston étagé (33,34,35,36) peut être actionné dans le sens de la production ou de l'amplification de la pression de freinage, et la position de départ du piston étagé (33,34,35,36,133, 134,135,136) permet une course de retour à l'opposé de la direction d'actionnement de ce piston dans le sens d'une production ou d'une amplification de la pression de freinage, caractérisé en ce que la liaison entre la première chambre de travail (53,55) et le maître-cylindre de frein (2) est réalisée par l'intermédiaire d'une première soupape de séparation (14,17) pouvant être actionnée par voie électromagnétique, et d'une seconde soupape de séparation (15,18) pouvant être actionnée par un voie électromagnétique, et en ce que la liaison (11',12') entre le maître-cylindre de frein (2) et la seconde chambre de travail (63,65) s'effectue exclusivement par l'intermédiaire de la seconde soupape de séparation (15,18), la première chambre de travail (53,55) et la seconde chambre de travail (63,65) étant reliées hydrauliquement entre elles tandis que la liaison entre la seconde chambre de travail (63,65) et le maître-cylindre de frein (2) reste fermée, lors d'une chute de la pression pendant une régulation ABS.

2. Système d'actionnement de frein réglable par voie électronique et protégé contre le blocage, pour véhicules automobiles, comportant un maître-cylindre de frein (2) à deux circuits, qui peut être actionné au moyen d'une pédale d'actionnement (1), des générateurs de la pression de freinage (3,5), pouvant être commandés par une unité de commande électronique (13) et qui comportent chacun un piston étagé respectif (133,135), pouvant être déplacés dans un alésage de cylindre à partir d'une position de départ, qui sépare une première chambre de travail (153, 155), qui est limitée par la surface la plus grande du piston et à laquelle est raccordé directement un frein de roue respectif (8,7) du véhicule, par rapport à une seconde chambre de travail (163,165) limitée par la surface la plus petite du piston et qui est reliée au maître-cylindre (2), et dans lequel le piston étagé (133,135) peut être actionné dans le sens d'une production de la pression de freinage, et la position de départ du piston étagé (133,135) permet une course de retour en sens opposé de sa direction d'actionnement dans le sens d'une production de la pression de freinage, caractérisé en ce qu'entre la seconde chambre de travail (163,165) et le maître-cylindre de frein (2) est prévue une soupape (60,61) pouvant être actionnée par voie électromagnétique, dans une première position de commutation de laquelle les chambres de travail (153,155, 163,165) sont séparées l'une de l'autre et la liaison entre la seconde chambre de travail (153,155) et le maître-cylindre de frein (2) est ouverte, et dans la seconde position de commutation de laquelle le maître-cylindre de frein (2) est séparé de la seconde chambre de travail (163,165) et une liaison est établie entre la première chambre de travail (153,155) et la seconde chambre de travail (163,165), la première chambre de travail (153,155) et la seconde chambre de travail (163,165) étant reliées hydrauliquement entre elles tandis que la liaison entre la seconde chambre de travail (163,165) et le maître-cylindre de frein (2) reste fermée, lors d'une réduction de la pression pendant une régulation ABS.

3. Système d'actionnement de frein réglable par voie électronique selon la revendication 1 ou 2, caractérisé en ce qu'il est prévu un dispositif de détection (21,22,23) pour identifier le désir de décélération du conducteur.

4. Système d'actionnement de frein réglable par voie électronique selon la revendication 1 ou 1 et 3, caractérisé en ce que les soupapes de séparation (14,15; 17,18) peuvent être actionnées en commun.

5. Système d'actionnement de frein réglable par voie électronique selon la revendication 2, caractérisé en ce que la soupape (60,61) est agencée sous la forme d'une soupape à 3/2 voies.

6. Système d'actionnement de frein réglable par voie électronique selon la revendication 5, caractérisé en ce que la soupape à 3/2 voies (60,61) est agencée sous la forme d'une soupape à deux sièges.

7. Système d'actionnement de frein réglable par voie électronique selon la revendication 3, caractérisé en ce qu'aussi bien les soupapes de séparation (14,15,17,18) ou les soupapes (60,61) peuvent être commandées indirectement par l'intermédiaire des signaux de sortie, envoyés à l'unité de commande électronique (3), du dispositif de détection (21,22,31).

8. Système d'actionnement de frein réglable par voie électronique selon au moins la revendication 3, caractérisé en ce que le dispositif de détection est formé par un capteur de force qui détecte la force d'actionnement agissant sur la pédale de frein (1).

9. Système d'actionnement de frein réglable par voie électronique selon la revendication 3, caractérisé en ce que le dispositif de détection est formé par au moins un capteur de pression (22,32) raccordé au maître-cylindre de frein (2).

10. Système d'actionnement de frein réglable par voie électronique selon la revendication 9, caractérisé en ce que le capteur de pression (22,32) est agencé en tant que constituant de l'unité de commande électronique (13).

11. Système d'actionnement de frein réglable par voie électronique selon l'une des revendications précédentes, dans lequel les générateurs (3,4,5,6) de la pression de freinage sont formés par des vérins hydrauliques (23,24,25,26), les pistons étagés (33,34,35,36) pouvant être actionnés au moyen de moteurs à courant continu (43,44,45,46) pouvant être commandés électriquement, caractérisé en ce que l'actionnement s'effectue au moyen d'un dispositif d'entraînement à filetage et à billes (27) monté entre le piston étagé (33,34,35,36) et le moteur à courant continu (43,44,45,46).

12. Système d'actionnement de frein réglable par voie électronique selon la revendication 11, caractérisé en ce que la broche (30) du dispositif d'entraînement à filetage et à billes (27) et l'arbre (31) du moteur à courant continu (43,44,45,46) forment un composant.

13. Système d'actionnement de frein réglable par voie électronique selon la revendication 12, caractérisé en ce que l'arbre (31) du moteur à courant continu (43,44,45, 46) est agencé avec une forme évidée et loge la tige (30) du dispositif d'entraînement à filetage et à billes (27).

14. Système d'actionnement de frein réglable par voie électronique selon l'une des revendications 1 à 13, caractérisé en ce que le moteur à courant continu (43,44, 45,46) est agencé de manière à être réversible.

15. Système d'actionnement de frein réglable par voie électronique selon l'une des revendications 11 à 14, caractérisé en ce que le piston étagé (33...36) des générateurs de la pression de freinage est agencé en deux parties et est constitué par un piston annulaire (70) ainsi qu'un piston intérieur (71), qui est guidé de manière à être déplaçable dans le piston annulaire (70) et est relié à la tige (30) selon une liaison de transmission de force, le piston annulaire (70) étant agencé de manière à pouvoir être entraîné par le piston intérieur (71).

16. Système d'actionnement de frein réglable par voie électronique selon la revendication 15, caractérisé en ce que le piston intérieur (61) limite, à l'intérieur du piston annulaire (70), une chambre hydraulique (72) qui est reliée à la première chambre de travail (53,54,55,56) du générateur de la pression de freinage (3,4,5,6).

17. Système d'actionnement de frein réglable par voie électronique selon la revendication 16, caractérisé en ce que sur le piston intérieur (71) est prévue une surface de transmission de force (89) qui coopère avec une butée (88) formée sur l'extrémité d'un canal (67) qui relie la chambre (72) à la première chambre de travail (53,54,55, 56).

18. Système d'actionnement de frein réglable par voie électronique selon l'une des revendications 1 à 9, caractérisé en ce que les générateurs (3,4,5,6) de la pression de freinage sont formés par des vérins hydrauliques (123,124,125), les pistons étagés (133,134,135) pouvant être actionnés au moyen de dispositifs d'entraînement linéaires (47,48,49 ou 147,148,149) qui sont commandés par une soupape et peuvent être commandés par voie pneumatique ou hydraulique.

19. Système d'actionnement de frein réglable par voie électronique selon la revendication 18, caractérisé en ce que les soupapes (40,41,42,140,141,142) utilisées pour la commande sont agencées sous la forme de soupapes de régulation de pression.

20. Système d'actionnement de frein réglable par voie électronique selon la revendication 18 ou 19, caractérisé en ce que la commande hydraulique des dispositifs d'entraînement linéaires (147,148,149) s'effectue à l'aide d'une seule source de pression (86), à laquelle peuvent être raccordés d'autres appareils d'utilisation hydrauliques.

21. Système d'actionnement de frein réglable par voie électronique selon la revendication 18 ou 19, caractérisé en ce que la commande des dispositifs d'entraînement linéaires (47,48,49) s'effectue au moyen d'une haute pression pneumatique.

22. Système d'actionnement de frein réglable par voie électronique selon l'une des revendications précédentes, caractérisé en ce que des moyens (50,51,52) sont prévus pour détecter la position des pistons (133,134,135) générateurs de pression.

23. Système d'actionnement de frein réglable par voie électronique selon la revendication 22, caractérisé en ce que les moyens sont formés par des capteurs de distance, qui détectent le déplacement axial de la tige (30).

24. Système d'actionnement de frein réglable par voie électronique selon la revendication 22, caractérisé en ce que les moyens sont formés par des transducteurs course de déplacement - tension.

25. Système d'actionnement de frein réglable par voie électronique selon l'une des revendications 11 à 17, caractérisé en ce que des moyens sont prévus pour détecter la position angulaire des rotors des moteurs à courant continu (43,44,45,46).

26. Système d'actionnement de frein réglable par voie électronique selon au moins la revendication 18 en combinaison avec la revendication 22, 23, 24 ou 25, caractérisé en ce que les soupapes (140,141,142) utilisées pour la commande sont intégrées dans un circuit de régulation de position, qui traite les signaux de sortie des moyens (50,51,52).

27. Système d'actionnement de frein réglable par voie électronique selon l'une des revendications précédentes, caractérisé en ce que des moyens (93,94,95) sont prévus pour détecter la pression appliquée par les générateurs (3,4,5) de la pression de freinage.

28. Système d'actionnement de frein réglable par voie électronique selon la revendication 27, caractérisé en ce que les moyens sont agencés sous la forme de capteurs de pression.

29. Système d'actionnement de frein réglable par voie électronique selon la revendication 18 en liaison avec la revendication 27 ou 28, caractérisé en ce que les soupapes (40,41,42) utilisées pour la commande sont intégrées dans un circuit de régulation de pression qui traite les signaux de sortie des moyens (93,94,95).

30. Système d'actionnement de frein réglable par voie électronique selon l'une des revendications précédentes, caractérisé en ce que le premier piston (38), situé du côté de la pédale, du maître-cylindre de frein (2) est agencé en deux éléments et se compose d'un piston annulaire (90) ainsi que d'un piston intérieur (92) guidé dans le piston annulaire.

31. Système d'actionnement de frein réglable par voie électronique selon la revendication 30, caractérisé en ce que le piston intérieur (92) peut être actionné directement par la pédale d'actionnement (1) et est précontraint au moyen d'un ressort de pression (87) à l'encontre de la direction d'actionnement.

32. Système d'actionnement de frein réglable par voie électronique selon la revendication 31, caractérisé en ce que le piston intérieur (92) délimite, à l'intérieur du piston annulaire (90), une chambre hydraulique (97) dans laquelle est disposé le ressort de pression (96) et qui est reliée à la première chambre de pression (22) située du côté de la pédale.
